# EUROPÄISCHE PATENTANMELDUNG

(11) **EP 0 527 121 A1**
(43) Veröffentlichungstag der Anmeldung: **10.02.1993**
(21) Anmeldenummer: 92890172.7
(22) Anmeldetag: 23.07.1992
(51) Int. Cl.: B25J 17/02, F16H 37/04

(54) **Getriebe zum Antrieb eines Gelenkes insbesondere eines Industrieroboters**

(30) Priorität: 05.08.1991 AT 1556/91
(71) Anmelder: IGM ROBOTERSYSTEME Aktiengesellschaft, A-2355 Wiener Neudorf, Niederösterreich (AT)
(72) Erfinder: Zampa, Erich, A-1230 Wien (AT)
(74) Vertreter: Beer, Manfred, Dipl.-Ing.

(57) **Zusammenfassung**

Das Getriebe zum Antrieb eines Gelenkes insbesondere eines Industrieroboters ist als Schneckengetriebe (9, 10) ausgeführt, dessen Schneckenwelle (12) im wesentlichen quer zur Längserstreckung des Armes (5), in dem sie gelagert ist, ausgerichtet ist. Zum Antrieb der Schneckenwelle (12) ist ein Kegelradgetriebe (15) vorgesehen. Die Schnecke (9) des Schneckengetriebes (9, 10) kann dabei eine an sich bekannte, geteilte und durch Federkraft verspannte Schnecke (9) sein. Dadurch ist ein spielfreies Getriebe kleiner Baugröße und hoher Übersetzung gegeben.

## Beschreibung

Die Erfindung betrifft ein Getriebe zum Antrieb eines Gelenkes insbesondere eines Industrieroboters mit einem Schneckengetriebe.

Insbesondere bei Industrierobotern besteht häufig das Problem, daß die Drehzahl der Antriebsmotoren, die beispielsweise mit 3000 U/min umlaufen, sehr stark übersetzt werden muß, wobei das Übersetzungsgetriebe in sich kein Spiel aufweisen soll. Zu diesem Zweck sind schon verschiedentlich kompliziert aufgebaute Getriebe vorgeschlagen worden, die insbesondere wegen ihres großen Platzbedarfes in moderne Industrieroboter nur mit Schwierigkeiten eingebaut werden konnten.

In der Soviet Inventions Illustrated, Sektion P 6, Woche 8509, Derwent Publications LTD London, X 25, SU 1079-429 ist ein Greifer z.B. für einen Manipulator eines Industrieroboters, beschrieben, der mittels eines Schneckengetriebes angetrieben wird. Die Schneckenwelle ist dabei parallel zur Längserstreckung des Roboterarmes ausgerichtet und wird von einer Welle über eine zwischengeschaltete Feder angetrieben.

Aufgabe der Erfindung ist es, ein Getriebe vorzuschlagen, das insbesondere für die Gelenke von Industrierobotern geeignet ist und das möglichst spielfrei und kompakt ausgebildet ist.

Diese Aufgabe wird dadurch gelöst, daß die Schneckenwelle im wesentlichen quer zur Längserstreckung des Armes, in dem sie gelagert ist, ausgerichtet ist und daß zum Antrieb der Schneckenwelle ein Kegelradgetriebe, insbesondere ein Hypoidkegelradgetriebe, vorgesehen ist.

Schneckengetriebe bieten den Vorteil, daß mit ihnen einerseits sehr hohe Übersetzungsverhältnisse erzielt werden können, sie jedoch in ihrer Baugröße sehr klein sind. Weiters können Schneckengetriebe durch einfache Mittel, wie sie im Stand der Technik bekannt sind, im wesentlichen spielfrei gestaltet werden. Das erfindungsgemäße Getriebe bietet überdies den Vorteil, daß der Arm im Bereich seines vorderen Endes, in welchem das Schneckenrad gelagert ist, sehr schmal ausgeführt werden kann, was die Einsetzbarkeit des Industrieroboters erhöht und daß dem Getriebe auf sehr einfache Weise eine weitere, platzsparende und konstruktiv günstig anzuordnende Übersetzungsstufe zugeordnet werden kann, falls dies erforderlich ist, und ohne daß die Außenabmessungen des Armes vergrößert werden müßten.

Eine besonders vorteilhafte Ausführungsform der Erfindung ist dadurch gekennzeichnet, daß die Schnecke des Schneckengetriebes eine an sich bekannte, geteilte und durch Federkraft verspannte Schnecke ist.

Diese Ausführungsform bietet den Vorteil, daß das Getriebe immer spielfrei läuft, auch wenn sich einzelne Getriebeteile unter Belastung elastisch verformen oder wenn sich Verzahnungsabweichungen durch Rundlaufdifferenzen bzw. Temperaturänderungen im Getriebe ergeben, die so ausgeglichen werden.

Eine weitere vorteilhafte Ausführungsform der Erfindung ist dadurch gekennzeichnet, daß die Schnecke des Schneckengetriebes eine an sich bekannte kegelige, axial verstellbare Schnecke ist. Diese Ausführungsform zeichnet sich besonders durch ihre technische Einfachheit aus.

Gemäß einer weiteren bevorzugten Ausführungsform der Erfindung ist zum Antrieb der Schnecke eine Gelenkwelle vorgesehen, wodurch ein besonders starrer und spielfreier Antrieb der Schnecke möglich ist.

Besonders bevorzugt kann das Schneckengetriebe im Gelenk, durch welches eine Halterung für ein Arbeitswerkzeug mit dem Arm des Industrieroboters verbunden ist, eingebaut sein.

Weitere Vorteile der Erfindung ergeben sich aus der nachfolgenden Beschreibung in Verbindung mit den Zeichnungen. Es zeigt:
Fig. 1 eine Ansicht eines fünfachsigen Industrieroboters,
Fig. 2 eine bevorzugte Anordnung eines Schneckengetriebes in einem Gelenk des Industrieroboters im Schnitt entlang der Linie II-II in Fig. 3,
Fig. 3 einen Schnitt durch die Anordnung von Fig. 2 entlang der Linie III-III,
Fig. 4 einen Schnitt durch eine weitere Ausführungsform der Anordnung von Fig. 2 und
Fig. 5 einen sechsachsigen Industrieroboter.

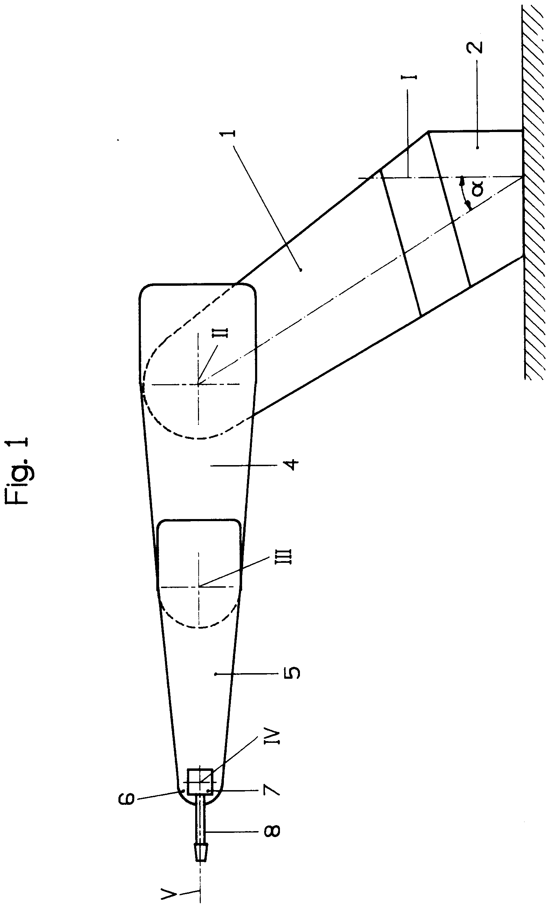

Der fünfachsige Industrieroboter von Fig. 1 in Drehgelenkbauweise besitzt eine Säule 1, die um eine vorzugsweise lotrechte Achse I drehbar ist und einen Arm 4, der mit der Säule 1 über eine waagrechte Achse II verbunden ist. An seinem anderen Ende ist der Arm 4 über eine Achse III drehbar mit einem weiteren Arm 5 verbunden. Der Arm 5 trägt an seinem freien Ende eine um eine Achse IV drehbare Halterung 7 für ein um eine Achse V drehbares Arbeitswerkzeug 8.

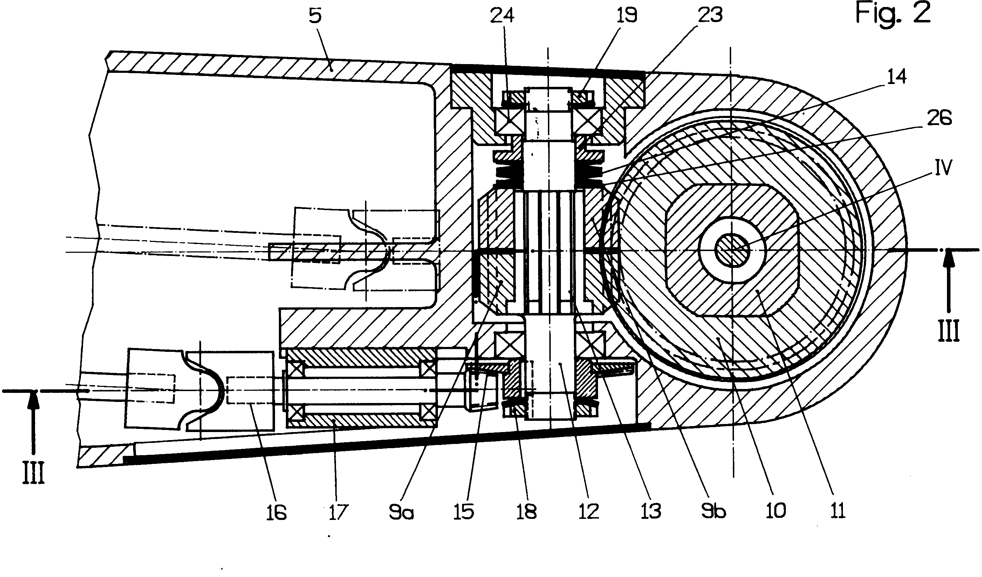

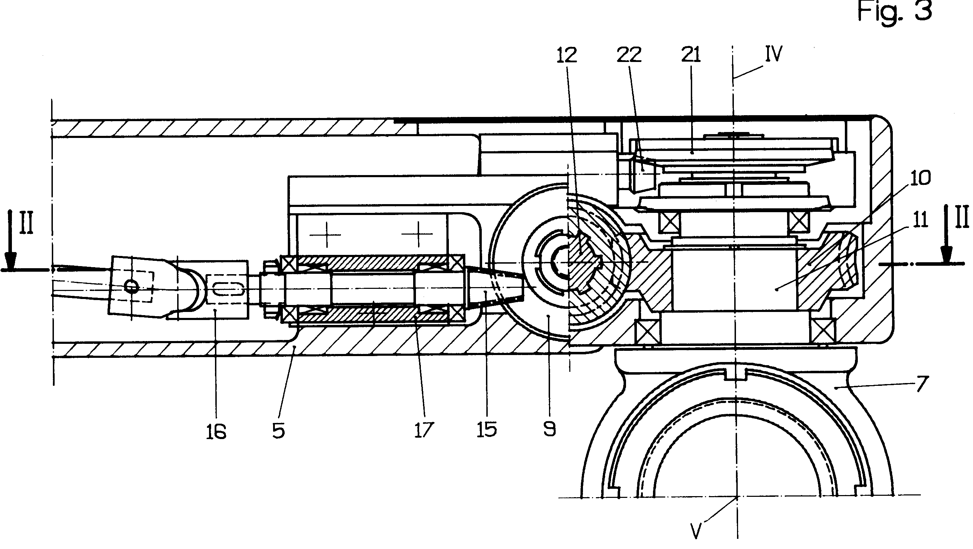

Der Antrieb eines oder mehrerer der den Achsen I bis IV zugeordneten Gelenke kann über ein Schneckengetriebe, beispielsweise das in den Fig. 2 und 3 dargestellte Schneckengetriebe, angetrieben werden.

Bevorzugt erfolgt jedoch der Antrieb des der Achse IV zugeordneten Gelenkes über das in Fig. 2 dargestellte Schneckengetriebe.

Das Schneckengetriebe von Fig. 2 und 3 besteht im wesentlichen aus einer in zwei Schneckenhälften 9a und 9b geteilten Schnecke und einem Schneckenrad 10, das über eine Welle 11 mit der Halterung 7 verbunden ist. Die Teile 9a und 9b der Schnecke sind gegen Verdrehung z.B. über eine Keilwellenverbindung 13 gesichert auf einer Schneckenwelle 12 angeordnet, wobei der Teil 9a der Schnecke nicht verschiebbar und der Teil 9b axial verschiebbar angeordnet sind.

Der Teil 9b der Schnecke wird über eine Feder 14 gegen den Teil 9a belastet, wodurch sich der spielfreie Lauf des Schneckengetriebes 9, 10 ergibt.

An einem Ende der Schneckenwelle 12 befindet sich das Tellerrad eines Kegelgetriebes 15, insbesondere eines Hypoidgetriebes, über welches die Schneckenwelle 12 und somit das Schnekkengetriebe 9, 10 von einer Gelenkwelle 16, die im Bereich des Kegelgetriebes in einer Lagerbuchse 17 gelagert ist, angetrieben wird.

An jedem Ende der Schneckenwelle 12 befindet sich eine Einstellmutter 18 bzw. 19, durch welche über Hülsen das Kegelradgetriebe 15 spielfrei eingestellt werden kann.

Die Feder 14 wird über eine Hülse 23 gegen den Teil 9b der Schnecke 9 gedrückt und über das Kugellager 24 von der Schneckenwelle 12 festgelegt.

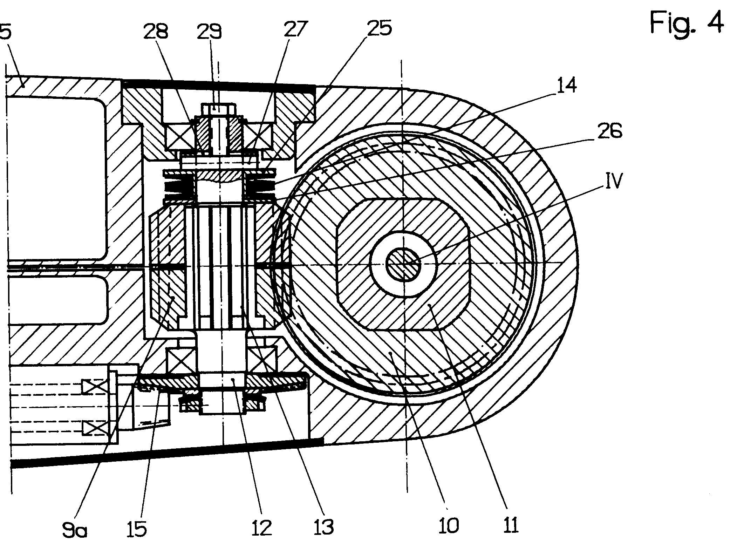

In Fig. 4 ist eine geänderte Ausführungsform der Vorrichtung von Fig. 2 dargestellt, bei welcher die Feder 14 von einer Hülse 25 über eine Scheibe 26 gegen den Teil 9b der Schnecke 9 gedrückt wird. Die Hülse 25 wird durch einen Stift 27, der quer zur Längsachse der Schneckenwelle 12 durch eine langlochartige Ausnehmung 28 in der Schneckenwelle 12 geführt ist, auf der Schneckenwelle 12 festgelegt. Zur Einstellung der Vorsprungkraft der Feder 14 ist eine Schraube 29 vorgesehen, welche koaxial zur Schneckenwelle 12 am Ende dieser in die Schneckenwelle 12 eingeschraubt ist. Die Schraube 29 ragt dabei bis in die langlochartige Ausnehmung 28 und der Stift 27 ist somit in Abhängigkeit von der Länge der Schraube 29 in der langlochartigen Ausnehmung 28 positionierbar, wodurch die Vorsprungkraft der Feder 14 eingestellt werden kann.

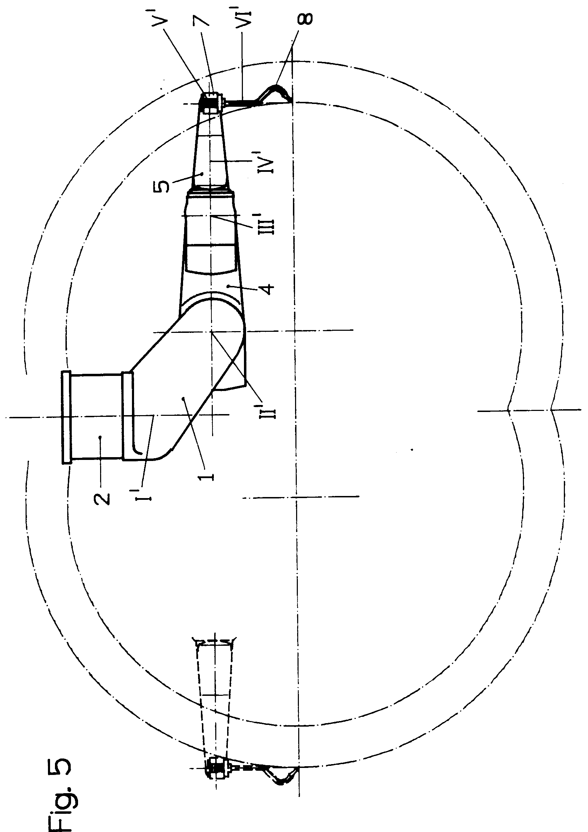

In Fig. 5 ist eine Ausführungsform eines hängend angeordneten Industrieroboters dargestellt, welcher im Unterschied zum in Fig. 1 dargestellten Industrieroboter sechs Achsen aufweist. Der in Fig. 5 dargestellte hängende Industrieroboter besitzt eine Säule 1, die um eine vorzugsweise lotrechte Achse I′ drehbar ist und einen Arm 4, der mit der Säule 1 über eine waagrechte Achse II′ verbunden ist. An seinem anderen Ende ist der Arm 4 über eine Achse III′ drehbar mit einem weiteren Arm 5 verbunden. Der Arm 5 ist gegenüber dem Arm 4 um eine Längsachse IV′ drehbar. Der Arm 5 trägt an seinem freien Ende eine um eine Achse V′ drehbare Halterung 7 für ein um eine Achse VI′ drehbares Arbeitswerkzeug 8. Vorzugsweise ist das erfindungsgemäße Getriebe der Achse V′ zugeordnet.

Durch die strichpunktierten Linien in Fig. 5 ist schematisch der durch den Industrieroboter bedienbare Bereich dargestellt.

Das insbesondere unter Bezugnahme auf die Achse V′ beschriebene und bei dieser wegen der dort besonders beengten Platzverhältnisse besonders bevorzugt verwendete Getriebe kann in dieser oder einer abgeänderten Form für andere oder für alle Achsen eines Industrieroboters verwendet werden. Insbesondere sind auch Abänderungen des Getriebes insoferne möglich, als die Schneckenwelle 12 etwa parallel zur Längserstreckung des Armes, in welchem sie gelagert ist, ausgerichtet ist, wobei in diesem Fall das Kegelradgetriebe 15 entfällt und durch ein beliebiges anderes Getriebe ersetzt werden kann bzw. die Schneckenwelle 12 direkt von der Gelenkwelle 16 oder einem anderen passenden Antrieb angetrieben werden kann.

## Patentansprüche

1. Getriebe zum Antrieb eines Gelenkes insbesondere eines Industrieroboters mit einem Schneckengetriebe, dadurch gekennzeichnet, daß die Schneckenwelle (12) im wesentlichen quer zur Längserstreckung des Armes (5), in dem sie gelagert ist, ausgerichtet ist und daß zum Antrieb der Schneckenwelle (12) ein Kegelradgetriebe (15), insbesondere ein Hypoidkegelradgetriebe, vorgesehen ist.

2. Getriebe nach Anspruch 1, dadurch gekennzeichnet, daß die Schnecke (9) des Schneckengetriebes (9, 10) eine an sich bekannte, geteilte und durch Federkraft verspannte Schnecke (9) ist.

3. Getriebe nach Anspruch 1, dadurch gekennzeichnet, daß die Schnecke des Schneckengetriebes eine an sich bekannte kegelige, axial verstellbare Schnecke ist.

4. Getriebe nach einem der Ansprüche 1 bis 3, dadurch gekennzeichnet, daß zum Antrieb der Schnecke (9) eine Gelenkwelle (10) vorgesehen ist.

5. Getriebe nach einem der Ansprüche 1 bis 4, dadurch gekennzeichnet, daß das Schneckengetriebe (9, 10) im Gelenk (IV, V′), durch welches eine Halterung (7) für ein Arbeitswerkzeug (8) mit dem Arm (5) des Industrieroboters verbunden ist, eingebaut ist.
